# EUROPEAN PATENT APPLICATION

(11) **EP 4 838 454 A1**
(43) Date of publication of application: **11.11.2026**
(21) Application number: 26730737.9
(22) Date of filing: 18.03.2026
(51) Int. Cl.: G06Q 50/20, G06Q 10/06

(54) **INFORMATION PROCESSING SYSTEM, INFORMATION PROCESSING DEVICE, INFORMATION PROCESSING METHOD, AND PROGRAM**

(30) Priority: 19.03.2025 JP 2025044387
(71) Applicant: DAIKIN INDUSTRIES, LTD., Osaka-Shi, Osaka 530-0001 (JP)
(72) Inventor: TAKAHARA, Kazumasa, Osaka-Shi, Osaka 530-0001 (JP)
(74) Representative: Goddar, Heinz J.
(86) International application number: PCT/JP2026/010715
(87) International publication number: WO 2026/197361

(57) **Abstract**

An information processing system according to one embodiment of the present disclosure is configured to cause inspection training on refrigeration cycle equipment to be executed in a virtual space displayed on a user terminal. The information processing system includes: a control unit; and a first storage unit configured to store a reference value of a task procedure for inspection training on refrigeration cycle equipment. The control unit is configured to: compare the reference value of the task procedure stored in the first storage unit with an actual task procedure of the inspection training performed by a user in the virtual space; and output a report indicating a result of the comparing.

## Description

### TECHNICAL FIELD

The present disclosure relates to an information processing system, an information processing apparatus, an information processing method, and a program.

### BACKGROUND ART

For example, Patent Document 1 listed below discloses a technique in which a head-mounted display is worn on the head of a worker who performs an inspection of equipment, and three-dimensional point cloud data is displayed on the head-mounted display, thereby superimposing the three-dimensional point cloud data on a real space so that the worker can easily identify an inspection location.

### RELATED-ART DOCUMENTS

### PATENT DOCUMENTS

Patent Document 1: Japanese Patent Application Laid-Open No. 2024-136503

### SUMMARY OF THE INVENTION

### PROBLEM TO BE SOLVED BY THE INVENTION

However, in the technique of Patent Document 1, since a worker needs to actually travel to an installation site of equipment and perform an inspection of the equipment, for example, when a plurality of workers are caused to perform inspection training of the equipment, it is difficult for each of the plurality of workers to easily perform the inspection training. In addition, in the technique of Patent Document 1, since no processing is performed after the worker performs the inspection of the equipment, it is not possible to easily determine whether the inspection work procedure was appropriate.

An object of the present disclosure is to provide a technique capable of outputting information that enables easy determination of whether an actual task procedure of inspection training on refrigeration cycle equipment performed by a user in a virtual space is appropriate.

### MEANS TO SOLVE THE PROBLEM

According to one embodiment of the present disclosure, an information processing system configured to cause inspection training on refrigeration cycle equipment to be executed in a virtual space displayed on a user terminal is provided. The information processing system includes:
a control unit; and
a first storage unit configured to store a reference value of a task procedure for inspection training on refrigeration cycle equipment,
wherein the control unit is configured to:
   compare the reference value of the task procedure stored in the first storage unit with an actual task procedure of the inspection training performed by a user in the virtual space; and
   output a report indicating a result of the comparing.

According to the present embodiment, it is possible to output information that enables easy determination of whether an actual task procedure of inspection training on refrigeration cycle equipment performed by a user in a virtual space is appropriate.

In the above-described embodiment,
the inspection training executed in the virtual space may include a certification mode and a training mode, and
the control unit may be configured to:
   authenticate a user who performs the inspection training in the virtual space;
   cause the virtual space to be displayed on the user terminal used by the authenticated user; and
   execute output processing for outputting the report when the user is authenticated in the certification mode.

In the above-described embodiment, the control unit may be configured to cause, when the user is authenticated in the training mode, an instructor image for providing a lecture on the inspection training to be displayed in the virtual space.

In the above-described embodiment, in the same virtual space,
a number of users authenticated in the certification mode may be one, and
a number of users authenticated in the training mode may be one or more.

In the above-described embodiment, the control unit may be configured to cause, in the virtual space, an inspection tool that is operable by the user for the inspection training to be displayed together with the refrigeration cycle equipment.

In the above-described embodiment,
the task procedure of the inspection training may include required check items and standard task items, and
the report may include information indicating whether the user has performed verification tasks corresponding to the required check items.

In the above-described embodiment, the control unit may be configured to:
compare the actual task procedure of the inspection training performed by the user with an actual task procedure of the inspection training performed by another user, and
output the report indicating a result of the comparing the actual task procedure of the inspection training performed by the user with the actual task procedure of the inspection training performed by the another user.

In the above-described embodiment, the information processing system may further include a second storage unit configured to store the actual task procedure of the inspection training performed by the user in the virtual space.

In the above-described embodiment, the first storage unit may be configured to store different reference values of the task procedure for respective virtual spaces.

According to one embodiment of the present disclosure, an information processing apparatus configured to cause inspection training on refrigeration cycle equipment to be executed in a virtual space displayed on a user terminal is provided. The information processing apparatus includes:
a control unit; and
a first storage unit configured to store a reference value of a task procedure for inspection training on refrigeration cycle equipment,
wherein the control unit is configured to:
compare the reference value of the task procedure stored in the first storage unit with an actual task procedure of the inspection training performed by a user in the virtual space; and
output a report indicating a result of the comparing.

According to one embodiment of the present disclosure, an information processing method executed by an information processing system is provided, the information processing system being configured to cause inspection training on refrigeration cycle equipment to be executed in a virtual space displayed on a user terminal, the information processing method including:
comparing a reference value of a task procedure for the inspection training on refrigeration cycle equipment stored in a first storage unit with an actual task procedure of the inspection training performed by a user in the virtual space; and
outputting a report indicating a result of the comparing.

According to one embodiment of the present disclosure, a program is provided for causing an information processing system configured to cause inspection training on refrigeration cycle equipment to be executed in a virtual space displayed on a user terminal to:
compare a reference value of a task procedure for the inspection training on refrigeration cycle equipment stored in a first storage unit with an actual task procedure of the inspection training performed by a user in the virtual space; and
output a report indicating a result of the comparing.

### BRIEF DESCRIPTION OF THE DRAWINGS

[FIG. 1] FIG. 1 is a diagram illustrating an example of a system configuration of an information processing system according to one embodiment.
[FIG. 2] FIG. 2 is a block diagram illustrating an example of a functional configuration of a server according to one embodiment.
[FIG. 3] FIG. 3 is a sequence diagram illustrating an example of a processing procedure performed by the information processing system according to one embodiment.
[FIG. 4] FIG. 4 is a flowchart illustrating an example of a procedure of evaluation processing performed by an evaluation unit according to one embodiment.
[FIG. 5] FIG. 5 is a diagram illustrating an example of an image of a virtual space displayed on a VR terminal according to one embodiment.
[FIG. 6] FIG. 6 is a diagram illustrating an example of authentication information stored in an authentication information storage unit according to one embodiment.
[FIG. 7] FIG. 7 is a diagram illustrating an example of a configuration of task logs stored in the authentication information storage unit according to one embodiment.
[FIG. 8] FIG. 8 is a diagram illustrating an example of a configuration of a standard task procedure stored in the authentication information storage unit according to one embodiment.
[FIG. 9] FIG. 9 is a diagram illustrating a specific example of a task log stored in the authentication information storage unit according to one embodiment.
[FIG. 10] FIG. 10 is a diagram illustrating an example of a report generated by the evaluation unit according to one embodiment.
[FIG. 11] FIG. 11 is a diagram illustrating an example of a report generated by the evaluation unit according to one embodiment.

### MODE FOR CARRYING OUT THE INVENTION

Hereinafter, embodiments will be described with reference to the drawings.

### (System Configuration of Information Processing System 10)

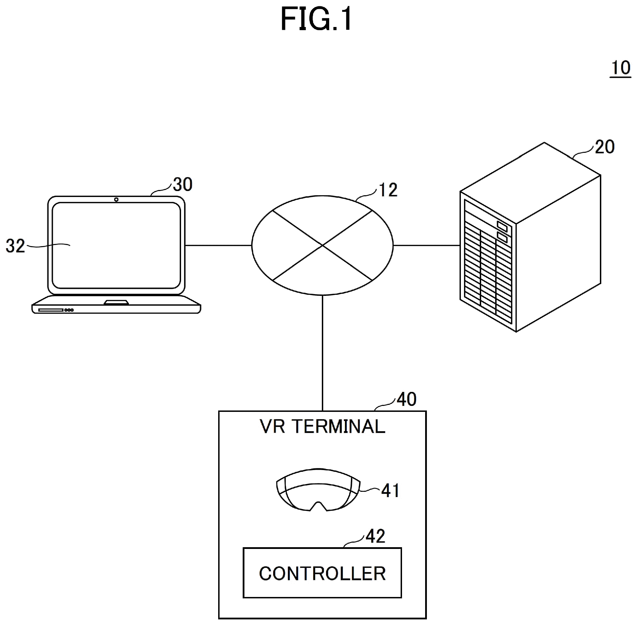

FIG. 1 is a diagram illustrating an example of a system configuration of an information processing system 10 according to one embodiment. The information processing system 10 illustrated in FIG. 1 is a system that causes a user to perform inspection training on refrigeration cycle equipment in a virtual space displayed on a VR (Virtual Reality) terminal 40.

As illustrated in FIG. 1, the information processing system 10 includes a server 20, a PC (Personal Computer) 30, and a VR terminal 40. The PC 30 and the VR terminal 40 are communicably connected to the server 20 via a communication network 12 such as the Internet or a LAN (Local Area Network).

The server 20 is an example of an "information processing apparatus." The server 20 includes an inspection training work environment provision function configured to provide, to the VR terminal 40, work environment data for performing inspection training on refrigeration cycle equipment in a virtual space. For example, the inspection training work environment provision function of the server 20 can cause an image of a virtual space in which the refrigeration cycle equipment is installed (a three-dimensional image), as the work environment data, to be displayed on the VR terminal 40 by transmitting the image to the VR terminal 40.

The virtual environment for the inspection training provided from the server 20 to the VR terminal 40 is also referred to as a "metaverse." The "metaverse" can provide a user a sense of being present in a virtual space by using technologies such as virtual reality (VR) and augmented reality (AR).

The server 20 further includes an inspection training evaluation function configured to evaluate inspection training on refrigeration cycle equipment performed by a worker in a virtual space displayed on the VR terminal 40. For example, the inspection training evaluation function of the server 20 stores in advance reference values of a task procedure for the inspection training (hereinafter referred to as a "standard task procedure"). The inspection training evaluation function of the server 20 records an actual task procedure of the inspection training performed by the worker using the VR terminal 40 (hereinafter referred to as a "task log"), and evaluates the inspection training performed by the worker using the VR terminal 40 by comparing the task log with the standard task procedure. Furthermore, the inspection training evaluation function of the server 20 can generate a report indicating an evaluation result of the inspection training performed by the worker using the VR terminal 40, and output the report to a PC 30 used by an administrator (e.g., an instructor of the inspection training) or the worker.

The VR terminal 40 is an example of a "user terminal," and is a device used by a worker (an example of a "user") who performs inspection training on refrigeration cycle equipment in a virtual space. The VR terminal 40 includes VR goggles 41 and a controller 42. The VR goggles 41 are worn on the head of the worker and display an image of a virtual space in which the refrigeration cycle equipment is installed, the image being provided from a VR control function of the server 20. The controller 42 receives various operation inputs from the worker for operating a virtual user in the virtual space displayed on the VR goggles 41, by being manually operated by the worker. Examples of operations of the virtual user in the virtual space include movement, gaze movement, and verification tasks on the refrigeration cycle equipment.

In the information processing system 10, a plurality of VR terminals 40 can be connected to the server 20 simultaneously. Accordingly, in the information processing system 10, a plurality of workers can simultaneously perform the inspection training using their respective VR terminals 40.

The PC 30 is an example of an "administrator terminal" used by an administrator. The PC 30 inputs and outputs various types of information to and from the server 20 relating to inspection tasks of refrigeration cycle equipment in the virtual space. For example, the PC 30 receives evaluation results of the inspection tasks from the server 20 and displays the evaluation results on a display 32 included in the PC 30.

The refrigeration cycle equipment is equipment that performs a vapor-compression refrigeration cycle. The refrigeration cycle equipment is, for example, an air conditioning apparatus that performs air conditioning of a target space. The air conditioning apparatus includes an outdoor unit, an indoor unit, and a liquid-side refrigerant connection pipe and a gas-side refrigerant connection pipe that connect the outdoor unit and the indoor unit, and is used for applications such as residential air conditioning, commercial air conditioning, and multi air conditioning for buildings.

The refrigeration cycle equipment is not limited to an air conditioning apparatus. For example, the refrigeration cycle equipment may be a cooling apparatus that cools the inside of a refrigerator or a cold storage warehouse, a chiller apparatus that cools or heats a heat medium such as water, or a heat pump water heater that heats water to generate hot water.

The information processing system 10 can cause a user to perform inspection tasks in a virtual space by displaying such refrigeration cycle equipment as a virtual image in the virtual space.

### (Functional Configuration of Server 20)

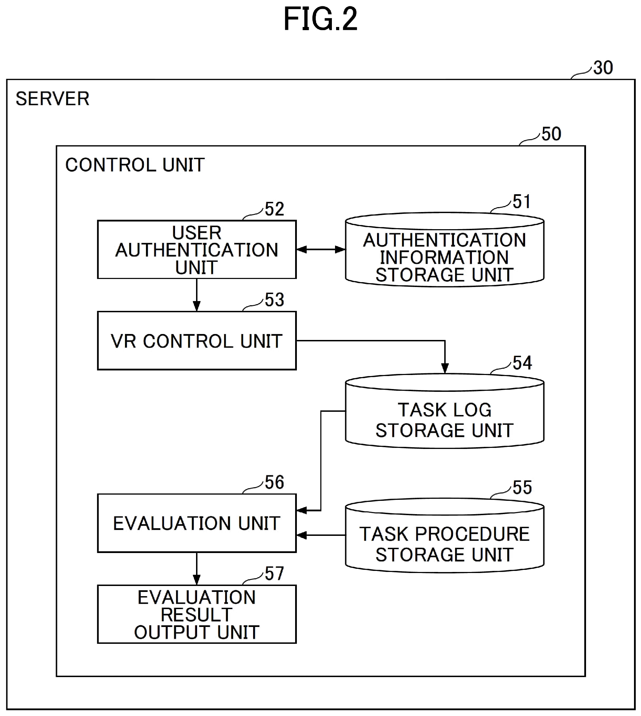

FIG. 2 is a block diagram illustrating an example of a functional configuration of a server 20 according to one embodiment.

As illustrated in FIG. 2, the server 20 includes a control unit 50. The control unit 50 includes an authentication information storage unit 51, a user authentication unit 52, a VR control unit 53, a task log storage unit 54, a task procedure storage unit 55, an evaluation unit 56, and an evaluation result output unit 57.

The authentication information storage unit 51 stores authentication information for authenticating login to inspection training on refrigeration cycle equipment in a virtual space for each of a plurality of users who are permitted to perform the inspection training. Examples of the authentication information stored in the authentication information storage unit 51 include a user ID and a password.

The user authentication unit 52 determines whether to authenticate login of a user to inspection training on refrigeration cycle equipment in the virtual space based on authentication information input by the user from the VR terminal 40 and authentication information stored in the authentication information storage unit 51. For example, when the authentication information (user ID and password) input by the user from the VR terminal 40 matches the authentication information (user ID and password) stored in the authentication information storage unit 51, the user authentication unit 52 authenticates login of the user to the inspection training in the virtual space.

The VR control unit 53 provides, to the VR terminal 40 used by a user authenticated by the user authentication unit 52 (hereinafter referred to as a "logged-in user"), work environment data for performing inspection training on refrigeration cycle equipment in the virtual space. For example, the VR control unit 53 reads, as the work environment data, an image (three-dimensional image) of a virtual space in which refrigeration cycle equipment is installed from the authentication information storage unit 51, and transmits the image of the virtual space to the VR terminal 40 used by the logged-in user, thereby causing the image of the virtual space to be displayed on the VR terminal 40 used by the logged-in user. The image of the virtual space displayed on the VR terminal 40 allows a virtual user to operate in the virtual space according to operation inputs to the VR terminal 40 by the logged-in user. Examples of operations of the virtual user in the virtual space include movement, gaze movement, and work on the refrigeration cycle equipment.

The task log storage unit 54 is an example of a "second storage unit," and stores a task log indicating an actual task procedure of inspection training on the refrigeration cycle equipment performed by a logged-in user in the virtual space. Specifically, while the logged-in user is performing the inspection training on the refrigeration cycle equipment in the virtual space, the VR control unit 53 records, each time a single verification task relating to the inspection training is performed, task information relating to the single verification task. Accordingly, when the inspection training by the logged-in user is completed, the task log storage unit 54 stores a task log indicating a plurality of tasks performed by the logged-in user and a sequence of the tasks.

The task procedure storage unit 55 is an example of a "first storage unit," and stores a standard task procedure (a reference value of a task procedure for inspection training on the refrigeration cycle equipment in the virtual space). The standard task procedure is, in other words, a most preferable task procedure for the inspection training. Specifically, the task procedure storage unit 55 stores, as the standard task procedure, a plurality of tasks included in the inspection training and a preferable sequence of the tasks. In the present embodiment, the inspection training on the refrigeration cycle equipment in the virtual space is referred to as "training," and a plurality of "training" types having different task descriptions are provided. Therefore, the task procedure storage unit 55 stores a standard task procedure for each of the plurality of "training" types.

The evaluation unit 56 generates a report indicating a comparison result obtained by comparing the task logs stored in the task log storage unit 54 with the standard task procedure stored in the task procedure storage unit 55.

The evaluation result output unit 57 outputs the report generated by the evaluation unit 56 by a predetermined output method. For example, the evaluation result output unit 57 transmits the report generated by the evaluation unit 56 to the PC 30 used by an administrator (e.g., an instructor of the inspection training). Accordingly, the PC 30 used by the administrator can output the report generated by the evaluation unit 56 by any output method (e.g., display on a display, printing, etc.).

The control unit 50 includes, for example, a CPU (Central Processing Unit), a ROM (Read Only Memory), and a RAM (Random Access Memory). Each of the functions of the control unit 50 described above is realized, for example, by the CPU executing a program stored in the ROM.

The information processing system 10 may include a plurality of information processing apparatuses (such as servers). In this case, the plurality of functions of the control unit 50 illustrated in FIG. 2 may be distributed and arranged among the plurality of information processing apparatuses.

### (Example of Processing Procedure of Information Processing System 10)

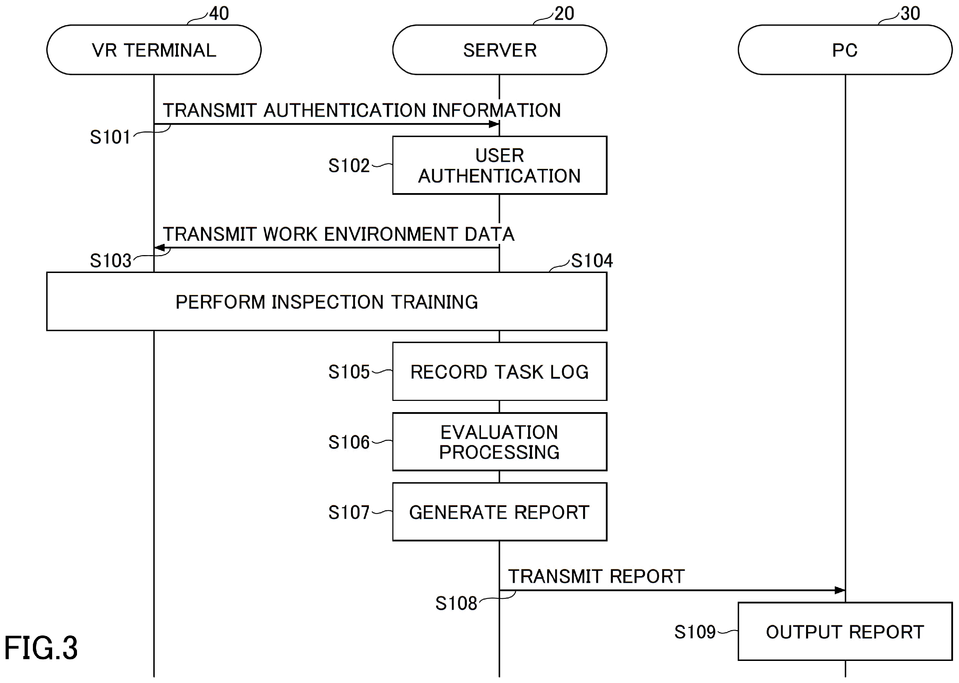

FIG. 3 is a sequence diagram illustrating an example of a processing procedure performed by the information processing system 10 according to one embodiment.

First, the VR terminal 40 transmits authentication information (e.g., a user ID and a password) input by a user to the server 20 via the communication network 12 (step S101).

Next, in the server 20, the user authentication unit 52 determines whether to authenticate login of the user to inspection training on the refrigeration cycle equipment in the virtual space based on the authentication information received from the VR terminal 40 and the authentication information stored in the authentication information storage unit 51 (step S102). Here, it is assumed that the login of the user is authenticated when the authentication information (user ID and password) received from the VR terminal 40 matches the authentication information (user ID and password) stored in the authentication information storage unit 51. Hereinafter, a user whose login has been authenticated is referred to as a "logged-in user."

Next, in the server 20, the VR control unit 53 transmits, to the VR terminal 40 used by the logged-in user, work environment data for performing inspection training on the refrigeration cycle equipment in the virtual space (e.g., including an image (three-dimensional image) of a virtual space in which the refrigeration cycle equipment is installed) (step S103). Accordingly, the VR terminal 40 used by the logged-in user can display the image (three-dimensional image) of the virtual space in which the refrigeration cycle equipment is installed, and can start the inspection training on the refrigeration cycle equipment in the virtual space by the logged-in user.

Next, the VR terminal 40 and a VR control unit 53 of the server 20 operate in conjunction with each other to cause a logged-in user to perform inspection training on refrigeration cycle equipment in a virtual space displayed on the VR terminal 40 (step S104). At this time, by providing an operation input to the VR terminal 40 using a controller 42, the logged-in user can perform verification tasks on the refrigeration cycle equipment by operating a virtual user in the virtual space displayed on VR goggles 41.

In step S104, while the logged-in user is performing the inspection training on the refrigeration cycle equipment in the virtual space, the VR control unit 53 records a task log in the task log storage unit 54 (step S105). Specifically, each time the logged-in user performs a single verification task relating to the inspection training, the VR control unit 53 records task information relating to the single verification task in the task log storage unit 54. Accordingly, when the inspection training by the logged-in user is completed, the task log storage unit 54 stores a task log indicating a plurality of tasks performed by the logged-in user and a sequence of the tasks.

Next, in the server 20, the evaluation unit 56 performs evaluation processing for evaluating the actual task procedure of the inspection training performed by the logged-in user in the virtual space by comparing the task logs stored in the task log storage unit 54 with the standard task procedure stored in the task procedure storage unit 55 (step S106).

Next, in the server 20, the evaluation unit 56 generates a report indicating an evaluation result of the evaluation processing in step S105 (i.e., a comparison result between the task log and the standard task procedure) (step S107).

Next, the evaluation result output unit 57 of the server 20 transmits the report generated in step S106 to the PC 30 used by an administrator (e.g., an instructor of the inspection training) (step S108).

Next, the PC 30 used by the administrator receives the report transmitted from the server 20 in step S108, and outputs the report by any output method (e.g., display on a display, printing, etc.) (step S109).

In step S108, the evaluation result output unit 57 of the server 20 may transmit the report generated in step S106 to a user terminal such as a PC used by the logged-in user, together with or instead of the PC 30 used by the administrator.

### (Example of Procedure of Evaluation Processing by Control Unit 50)

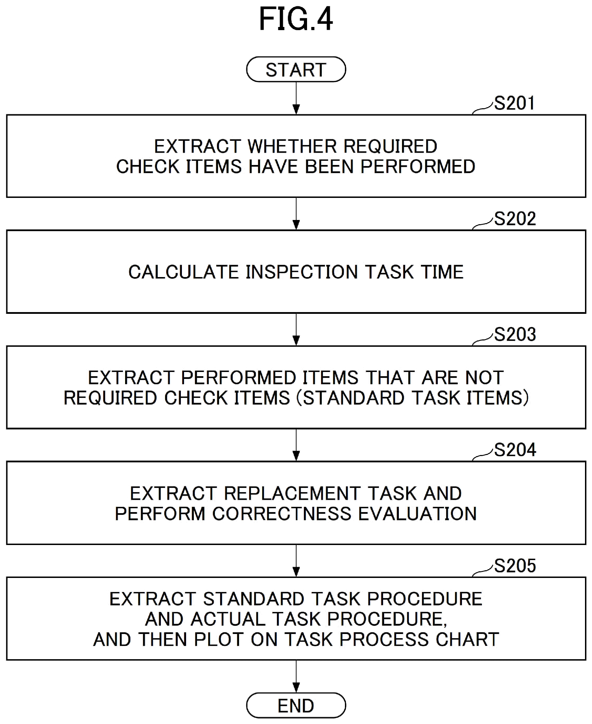

FIG. 4 is a flowchart illustrating an example of a procedure of evaluation processing performed by the evaluation unit 56 according to one embodiment.

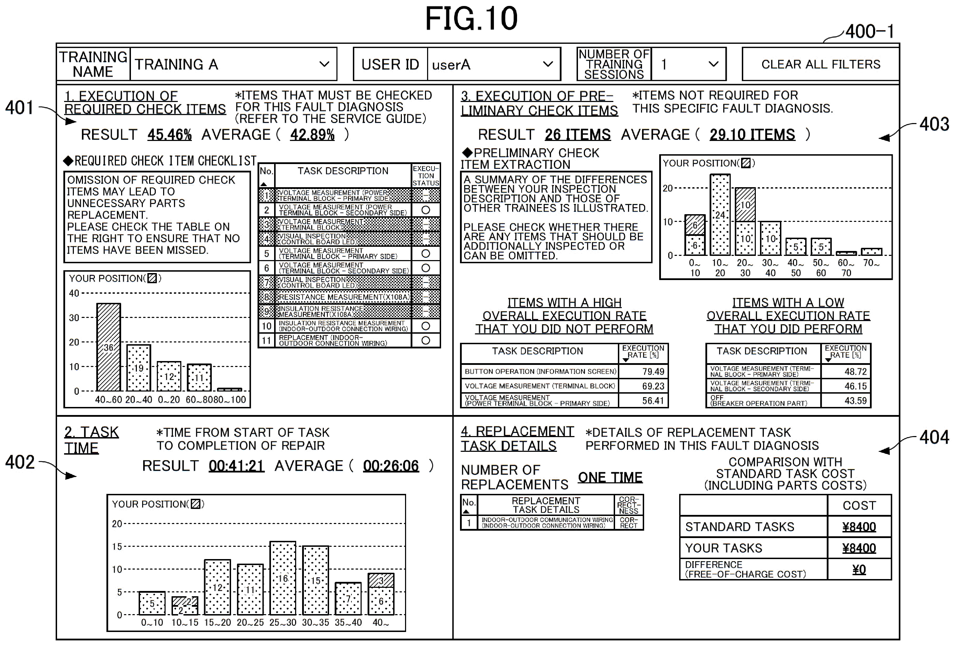

First, the evaluation unit 56 extracts, from the task logs stored in the task log storage unit 54, whether required check items have been performed by the logged-in user (step S201). Whether the required check items extracted from the task log in step S201 have been performed is used by the evaluation unit 56 to generate display data to be displayed in a first evaluation result display field 401 of a report 400-1 (see FIG. 10).

Next, the evaluation unit 56 calculates, based on the task logs stored in the task log storage unit 54, an inspection task time required by the logged-in user for the inspection training (step S202). The inspection task time calculated in step S202 is used by the evaluation unit 56 when generating display data to be displayed in a second evaluation result display field 402 of the report 400-1 (see FIG. 10).

Next, the evaluation unit 56 extracts, from the task logs stored in the task log storage unit 54, preliminary check items (standard task items), which are performed items that are not required check items (step S203). The preliminary check items extracted in step S203 are used by the evaluation unit 56 when generating display data to be displayed in a third evaluation result display field 403 of the report 400-1 (see FIG. 10).

Next, the evaluation unit 56 extracts a replacement task performed by the logged-in user from the task logs stored in the task log storage unit 54, and performs correctness evaluation thereof (step S204). The extraction result of the replacement task and the correctness evaluation result in step S204 are used by the evaluation unit 56 when generating display data to be displayed in a fourth evaluation result display field 404 of the report 400-1 (see FIG. 10).

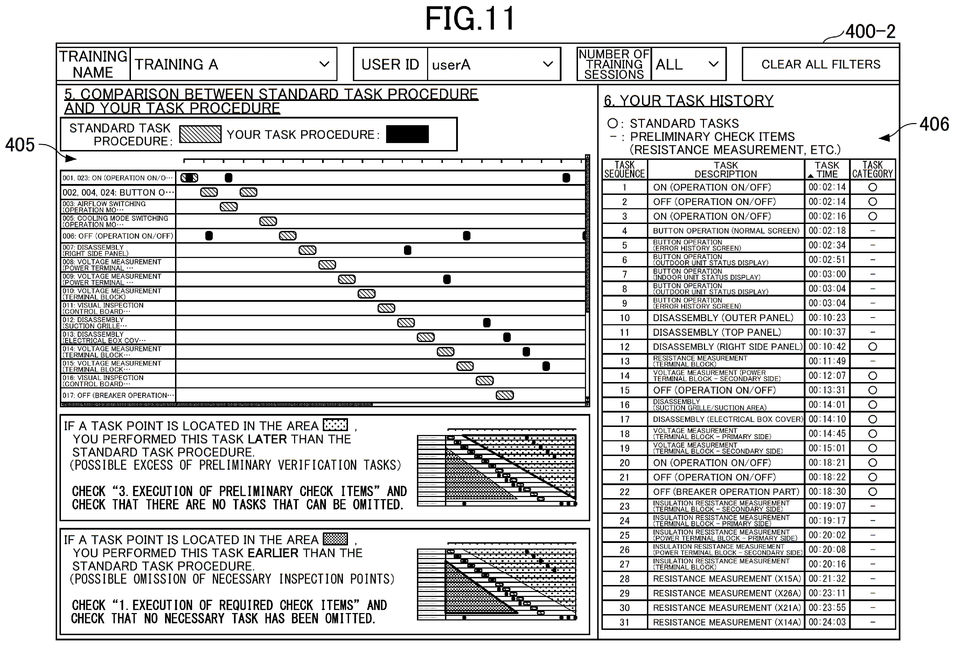

Next, the evaluation unit 56 plots, on a task process chart displayed in a report, a standard task procedure extracted from the task procedure storage unit 55 and an actual task procedure of the inspection training performed by the logged-in user extracted from the task logs stored in the task log storage unit 54 (step S205). The extraction results of the standard task procedure and the actual task procedure, and the plotting results on the task process chart performed in step S205, are used when generating a task process chart to be displayed in a fifth evaluation result display field 405 of a report 400-2 (see FIG. 11).

Thereafter, the evaluation unit 56 ends the series of evaluation processing illustrated in FIG. 4.

### (Example of Image of Virtual Space Displayed on VR Terminal 40)

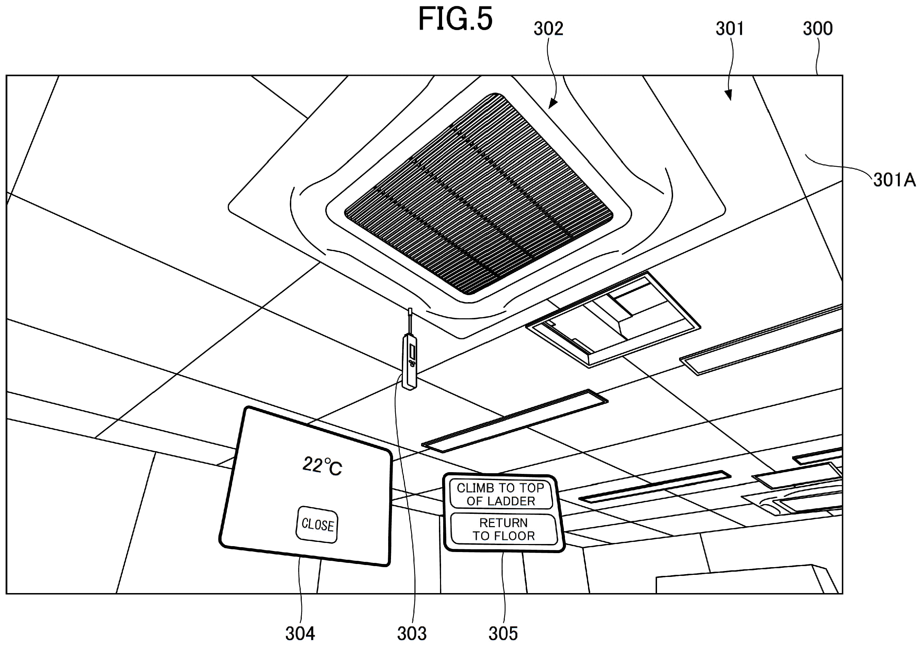

FIG. 5 is a diagram illustrating an example of an image of a virtual space displayed on the VR terminal 40 according to one embodiment.

A virtual space image 300 illustrated in FIG. 5 is an example of an image of a virtual space that is provided from the server 20 to the VR terminal 40 and displayed on the VR goggles 41 of the VR terminal 40 when a logged-in user performs training (i.e., inspection training on the refrigeration cycle equipment in the virtual space) using the VR terminal 40.

The virtual space image 300 is a three-dimensional image representing, in three dimensions, a virtual space 301 as viewed from a virtual user present in the virtual space 301.

In the virtual space image 300, a ceiling-mounted indoor unit 302 is installed on a ceiling portion 301A in the virtual space 301 as an example of the refrigeration cycle equipment to be inspected in the inspection training.

Further, in the virtual space image 300, a thermometer 303 (an example of an "inspection tool") and a window 304 indicating an outlet air temperature of the indoor unit 302 measured by the thermometer 303 are displayed in the virtual space 301.

Further, in the virtual space image 300, a window 305 indicating options of actions that the logged-in user can cause a virtual user in the virtual space 301 to perform is displayed in the virtual space 301.

For example, the logged-in user can determine a condition of the indoor unit 302 based on the outlet air temperature of the indoor unit 302 displayed in the window 304, and can select any action option from among the plurality of action options indicated in the window 305 by operating the controller 42.

As a result, in the virtual space image 300, the virtual user operates in the virtual space 301 in accordance with the action option selected by the logged-in user, and a state of the virtual space 301 displayed in the virtual space image 300 (e.g., a relative position of the virtual user with respect to the indoor unit 302, a state of the indoor unit 302, etc.) changes in an animated manner.

Each time the logged-in user performs, via the virtual user, one task item included in the training in the virtual space 301, information relating to execution of the work of the one task item (e.g., a task procedure, task description, task time, a task category, etc.) is recorded, by the VR control unit 53 in the server 20, in a task log stored in the task log storage unit 54.

The indoor unit 302 displayed in the virtual space image 300 is an example of the refrigeration cycle equipment to be inspected, and other refrigeration cycle equipment may be displayed in place of the indoor unit 302 in the virtual space image 300, or a plurality of refrigeration cycle equipment may be displayed together with the indoor unit 302.

Further, the inspection tool displayed in the virtual space image 300 is not limited to the thermometer 303, and tools corresponding to inspection tasks performed by the logged-in user are displayed in the virtual space 301.

### (Example of Authentication Information Stored in Authentication Information Storage Unit 51)

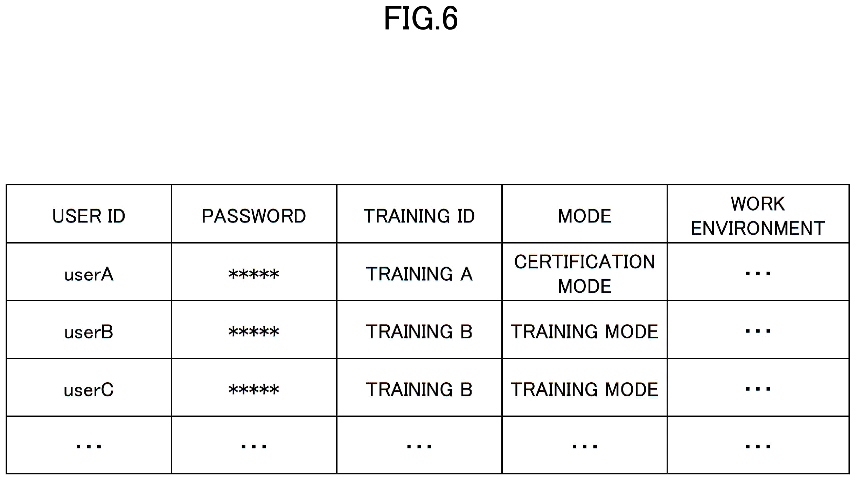

FIG. 6 is a diagram illustrating an example of authentication information stored in the authentication information storage unit 51 according to one embodiment.

As illustrated in FIG. 6, the authentication information storage unit 51 stores authentication information of each of a plurality of users. In the example illustrated in FIG. 6, each piece of authentication information includes a "user ID," a "password," a "training ID," a "mode," and "work environment data." The "user ID" is an identifier for uniquely identifying a user. The "password" is a password required when the user logs in to the training. The "training ID" is an identifier of training permitted for the user.

The "mode" is a mode of training permitted for the user. As the "mode," either a "certification mode" or a "training mode" is set.

The "training mode" is a mode in which the user learns inspection tasks on the refrigeration cycle equipment to be inspected in the virtual space. In the "training mode," one or more users can enter the same virtual space, and can learn appropriate procedures by receiving guidance on task procedures. The control unit 50 can cause an instructor image for providing a lecture of the inspection training to be displayed in the image of the virtual space when the user is authenticated in the "training mode." Accordingly, a user permitted to log in in the "training mode" can learn inspection tasks together with other users and an instructor in the same virtual space.

The "certification mode" is a mode in which the user performs a certification test of inspection tasks on the refrigeration cycle equipment to be inspected in the virtual space. In the "certification mode," only one user can enter the virtual space. In the "certification mode," no guidance on task procedures is provided, and the user performs inspection actions based on the user's own judgment. When the user is authenticated in the certification mode, the control unit 50 records a task log of the inspection training performed by the user, evaluates the actual task procedure of the inspection training performed by the user, and generates and outputs a report.

The "work environment data" is work environment data of training permitted for the user. For example, the "work environment data" includes actual data of an image (three-dimensional image) of a virtual space in which refrigeration cycle equipment is installed (or a link to the actual data). Different data is used as the "work environment data" for each training, and inspection training corresponding to each training can be performed by varying, for each training, a type or an operating state of the refrigeration cycle equipment to be inspected, or a failure state of the refrigeration cycle equipment.

### (Example of Configuration of Task Logs Stored in Task Log Storage Unit 54)

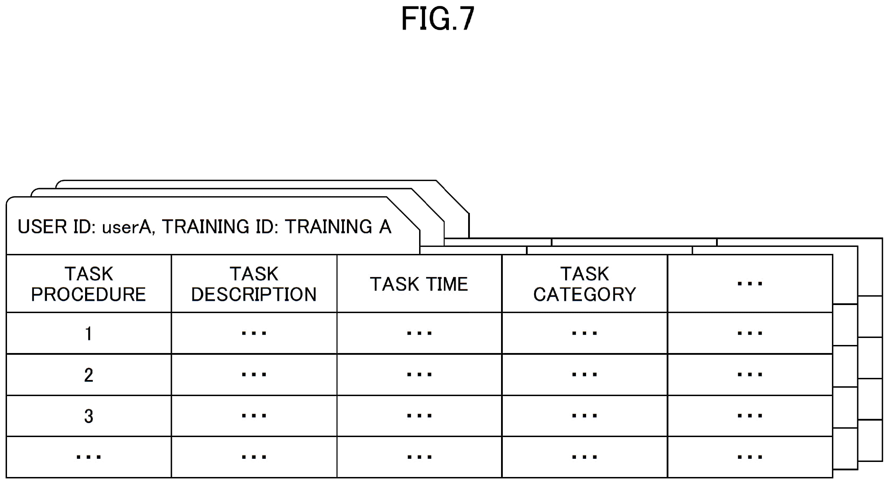

FIG. 7 is a diagram illustrating an example of a configuration of task logs stored in an authentication information storage unit 51 according to an embodiment.

As illustrated in FIG. 7, the task log storage unit 54 stores task logs of respective training sessions performed by a plurality of logged-in users. However, in the task log storage unit 54, a task log of a training session is stored when a "mode" of the training session performed by the logged-in user is a "review mode."

In the example illustrated in FIG. 7, each task log is associated with a "user ID" of the logged-in user who performed the training session and a "training ID" of the training session performed by the logged-in user.

Further, in the example illustrated in FIG. 7, each task log records a plurality of task items performed by the logged-in user in the training session in an order in which the tasks were performed. In addition, each task log includes, for each task item performed by the logged-in user in the training session, a "task procedure," a "task description," a "task time," a "task category," and the like.

"Task procedure" indicates an order in which a task of the task item is performed. "Task description" indicates contents of the task of the task item. "Task time" indicates a time required for performing the task of the task item. "Task category" indicates whether the task item is a required task item or a standard task item. For example, in the "task category," "∘" is set when the task item is a required task item, and "-" is set when the task item is a standard task item.

### (Example of Configuration of Standard task Procedures Stored in Task procedure Storage Unit 55)

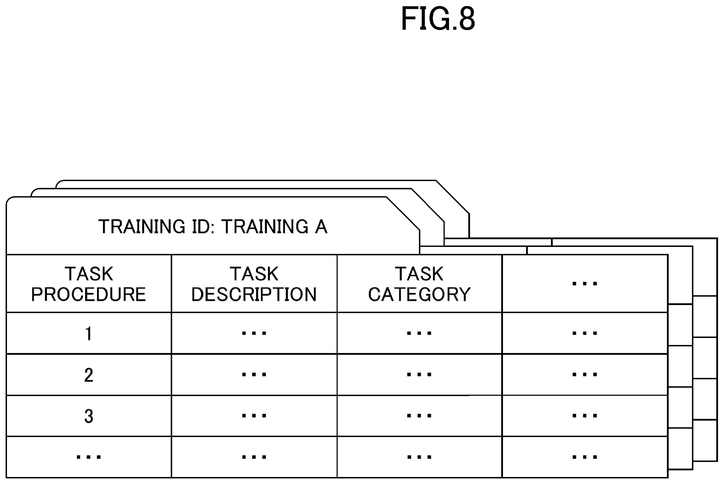

FIG. 8 is a diagram illustrating an example of a configuration of standard task procedures stored in the authentication information storage unit 51 according to one embodiment.

As illustrated in FIG. 8, the task procedure storage unit 55 stores standard task procedures for respective training.

In the example illustrated in FIG. 8, each standard task procedure is assigned a "training ID" for uniquely identifying the training.

In the example illustrated in FIG. 8, each standard task procedure records a plurality of task items included in the training in a preferable order of the task items. Further, each standard task procedure includes, for each task item, a "task procedure," "task description," a "task category," and the like.

The "task procedure" indicates an order in which the work of the task item should be performed. The "task description" indicates details of the work of the task item. The "task category" indicates whether the task item is a required task item or a standard task item. For example, as the "task category," "∘" is set when the task item is a required task item, and "-" is set when the task item is a standard task item.

### (Specific Example of Task log Stored in Task log Storage Unit 54)

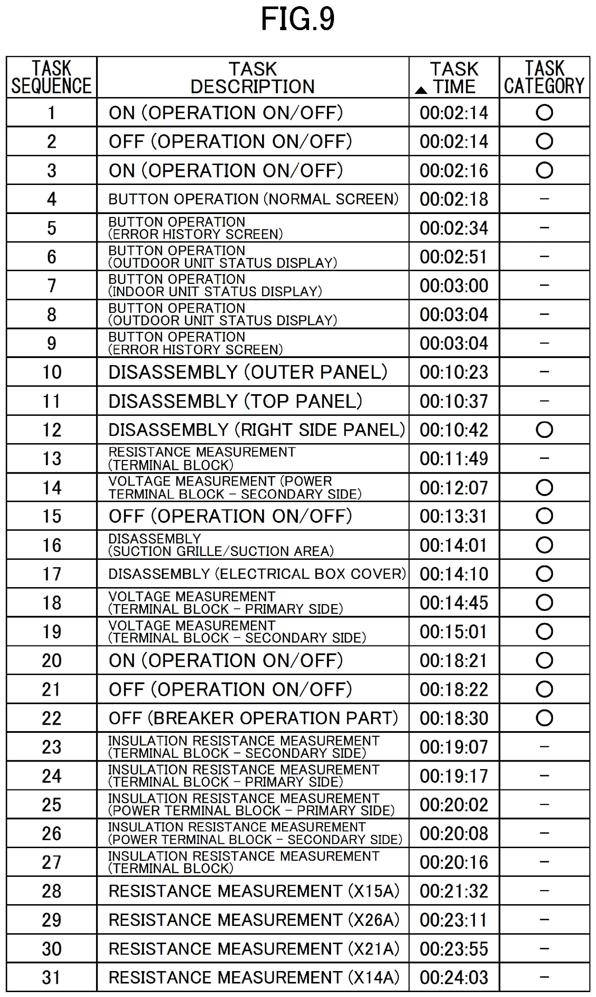

FIG. 9 is a diagram illustrating a specific example of a task log stored in the authentication information storage unit 51 according to one embodiment. FIG. 9 illustrates an example of a task log in a case where a user performs inspection tasks on an indoor unit in a virtual space.

As illustrated in FIG. 9, the task log stored in the authentication information storage unit 51 records a plurality of task items performed by the logged-in user in the training (31 task items in the example illustrated in FIG. 9) in an order in which the task items were performed. Further, as illustrated in FIG. 9, the task log stored in the authentication information storage unit 51 includes, for each task item performed by the logged-in user in the training, a "task procedure," "task description," "task time," a "task category," and the like.

### (Example of Report Generated by Evaluation Unit 56)

FIGS. 10 and 11 are diagrams illustrating an example of a report generated by the evaluation unit 56 according to one embodiment. FIGS. 10 and 11 illustrate an example of a report of "training A" performed by a user having a user ID "userA."

A report 400-1 illustrated in FIG. 10 illustrates a first page of the report generated by the evaluation unit 56. A report 400-2 illustrated in FIG. 11 illustrates a second page of the report generated by the evaluation unit 56.

As illustrated in FIG. 10, the report 400-1 includes a first evaluation result display field 401, a second evaluation result display field 402, a third evaluation result display field 403, and a fourth evaluation result display field 404.

The first evaluation result display field 401 displays an evaluation result relating to execution of required check items. For example, in the example illustrated in FIG. 10, a required check item checklist including whether each required check item has been performed by the logged-in user is displayed in the first evaluation result display field 401. In the required check item checklist, "∘" indicates that the user has performed the corresponding required check item, and "-" indicates that the user has not performed the corresponding required check item. This required check item checklist is generated by the evaluation unit 56 based on whether or not the logged-in user has performed the required check items, which is extracted from the task log in step S201 of FIG. 4. In addition, in the example illustrated in FIG. 10, the first evaluation result display field 401 displays an execution rate of the required check items by the logged-in user, an average value of execution rates of the required check items among a plurality of users, and a graph indicating the number of users for each execution rate of the required check items.

The second evaluation result display field 402 displays a task time required by the logged-in user for the inspection training. This task time is calculated by the evaluation unit 56 based on the task log in step S202 of FIG. 4. In addition, in the example illustrated in FIG. 10, the second evaluation result display field 402 displays an average task time among a plurality of users and a graph indicating the number of users for each task time.

The third evaluation result display field 403 displays an evaluation result relating to execution of preliminary check items. For example, in the example illustrated in FIG. 10, the number of preliminary check items performed by the logged-in user is displayed in the third evaluation result display field 403. The number of preliminary check items is calculated by the evaluation unit 56 based on the preliminary check items extracted in step S203 of FIG. 4.
In addition, in the example illustrated in FIG. 10, the third evaluation result display field 403 displays an average number of preliminary check items among a plurality of users, a graph indicating the number of users for each number of preliminary check items, preliminary check items having a high execution rate among the plurality of users but not performed by the logged-in user, and preliminary check items having a low execution rate among the plurality of users but performed by the logged-in user.

The fourth evaluation result display field 404 displays details of replacement task performed by the logged-in user in the inspection training. For example, in the example illustrated in FIG. 10, the fourth evaluation result display field 404 displays details of replacement task performed by the logged-in user in the inspection training, including correctness evaluation results. The details of the replacement task are generated by the evaluation unit 56 based on the extraction result of the replacement task and the correctness evaluation result in step S204 of FIG. 4. In addition, in the example illustrated in FIG. 10, the fourth evaluation result display field 404 displays an amount associated with the replacement task performed by the logged-in user, an amount associated with replacement task defined as standard task items, and a difference between the amounts.

As illustrated in FIG. 11, the report 400-2 includes a fifth evaluation result display field 405 and a work history display field 406.

The fifth evaluation result display field 405 displays, in comparison, a standard task procedure and an actual task procedure of the inspection training performed by the logged-in user. For example, in the example illustrated in FIG. 11, a task process chart is displayed in the fifth evaluation result display field 405. In the task process chart, a plurality of task items included in the inspection training are arranged in a vertical direction in accordance with the standard task procedure. Further, a horizontal direction represents a time axis, and, for each of the plurality of task items, an execution period in the standard task procedure and an execution period in the actual task procedure performed by the logged-in user are respectively indicated by bar-shaped plots of different colors. The task process chart is generated by the evaluation unit 56 through extraction of the standard task procedure and the actual task procedure and plotting on the task process chart in step S205 of FIG. 4.

In the task process chart illustrated in FIG. 11, a plurality of plots indicating execution periods of respective task items in the standard task procedure are arranged linearly in a direction toward a lower right. Accordingly, in the task process chart illustrated in FIG. 11, it is preferable that a plurality of plots indicating execution periods of respective task items in the actual task procedure performed by the logged-in user are arranged at positions close to a straight line formed by the plurality of plots of the standard task procedure.

According to the task process chart illustrated in FIG. 11, it is possible to easily visually recognize whether each of a plurality of task items performed by the logged-in user in the training is earlier or later than the standard task procedure.

For example, in the task process chart illustrated in FIG. 11, when a plot of the actual task procedure performed by the logged-in user is arranged in an upper-right region relative to the straight line formed by the plurality of plots of the standard task procedure, it is possible to easily visually recognize that the corresponding task item was performed by the logged-in user at a timing later than the standard task procedure.

Further, for example, in the task process chart illustrated in FIG. 11, when a plot of the actual task procedure performed by the logged-in user is arranged in a lower-left region relative to the straight line formed by the plurality of plots of the standard task procedure, it is possible to easily visually recognize that the corresponding task item was performed by the logged-in user at a timing earlier than the standard task procedure.

The work history display field 406 displays a work history of work performed by the logged-in user in the training. In the example illustrated in FIG. 11, a task log similar to the task log illustrated in FIG. 9 is displayed as the work history in the work history display field 406.

### (Operations and Effects)

As described above, an information processing system 10 according to one embodiment is an information processing system 10 configured to cause inspection training on refrigeration cycle equipment to be executed in a virtual space displayed on a VR terminal 40, the information processing system 10 includes a control unit 50, and a task procedure storage unit 55 configured to store a reference value of a task procedure for the inspection training on refrigeration cycle equipment, wherein the control unit 50 compares the reference value of the task procedure stored in the task procedure storage unit 55 with an actual task procedure of the inspection training performed by a user in the virtual space, and outputs a report indicating a result of the comparing.

Accordingly, the information processing system 10 according to one embodiment can output, as information that enables easy determination of whether the actual task procedure of the inspection training on the refrigeration cycle equipment performed by the user in the virtual space is appropriate, a report indicating a comparison result between the reference value of the task procedure and the actual task procedure.

Here, in general, when performing inspection training on refrigeration cycle equipment such as an air conditioning apparatus, it is necessary to use an actual machine, and therefore it is necessary to gather workers at a site. In addition, in such a case, it is difficult to perform training on inspection items that are difficult to reproduce in an actual machine, such as periodic inspections relating to refrigerant leakage from the air conditioning apparatus and special operations. On the other hand, the information processing system 10 according to one embodiment can cause a user to perform inspection training using refrigeration cycle equipment displayed in a virtual space, and therefore workers can perform the inspection training remotely from arbitrary locations, and can also perform training including inspection items that are difficult to reproduce in an actual machine. Accordingly, according to the information processing system 10 of one embodiment, training of inspection tasks on refrigeration cycle equipment can be efficiently performed for a plurality of workers.

Further, in the information processing system 10 according to one embodiment, the inspection training executed in the virtual space includes a certification mode and a training mode, and the control unit 50 is configured to: authenticate a user who performs the inspection training in the virtual space, cause the virtual space to be displayed on the VR terminal 40 used by the authenticated user, and execute output processing for outputting the report when the user is authenticated in the certification mode.

Accordingly, the information processing system 10 according to one embodiment can cause a user authenticated in the training mode to freely perform the inspection training. Further, the information processing system 10 according to one embodiment can evaluate the inspection training for a user authenticated in the certification mode, and output a report indicating the evaluation result.

Further, in the information processing system 10 according to one embodiment, the control unit 50 is configured to cause, when the user is authenticated in the training mode, an instructor image for providing a lecture on the inspection training to be displayed in the virtual space.

Accordingly, the information processing system 10 according to one embodiment can enhance a learning effect of the inspection training performed by a user authenticated in the training mode.

Further, in the information processing system 10 according to one embodiment, in a same virtual space, a number of users authenticated in the certification mode is one, and a number of users authenticated in the training mode is one or more.

Accordingly, the information processing system 10 according to one embodiment can prevent a user authenticated in the certification mode from being interfered with by other users while performing the inspection training in the virtual space.

Further, in the information processing system 10 according to one embodiment, the control unit 50 is configured to cause, in the virtual space, an inspection tool that is operable by a user for the inspection training to be displayed together with the refrigeration cycle equipment.

Accordingly, the information processing system 10 according to one embodiment can improve the realism of the inspection training performed by a user in the virtual space.

Further, in the information processing system 10 according to one embodiment, the task procedure of the inspection training includes required check items and standard task items, and the report includes information indicating whether the user has performed verification tasks corresponding to the required check items.

Accordingly, the information processing system 10 according to one embodiment enables easy determination of, from the report, whether there is any omission in verification tasks corresponding to the required check items by the user.

Further, in the information processing system 10 according to one embodiment, the control unit 50 is configured to compare an actual task procedure of the inspection training performed by a user with an actual task procedure of the inspection training performed by another user, and output a report indicating a result of the comparing the actual task procedure of the inspection training performed by the user with the actual task procedure of the inspection training performed by the another user.

Accordingly, the information processing system 10 according to one embodiment can, from the report, enable easy determination of a comparison result of the actual task procedures among a plurality of users.

Further, the information processing system 10 according to one embodiment further includes a second storage unit configured to store an actual task procedure of the inspection training performed by a user in the virtual space.

Accordingly, the information processing system 10 according to one embodiment can output, at any timing, after a user performs the inspection training in the virtual space, a report indicating a comparison result between the reference value of the task procedure stored in the first storage unit and the actual task procedure stored in the second storage unit.

Further, in the information processing system 10 according to one embodiment, the task procedure storage unit 55 is configured to store different reference values of task procedures for respective virtual spaces.

Accordingly, the information processing system 10 according to one embodiment can output, for each of a plurality of virtual spaces having different task procedures, a report indicating a comparison result between the reference value of the task procedure and the actual task procedure.

Further, a server 20 according to one embodiment is a server 20 configured to cause inspection training on refrigeration cycle equipment to be executed in a virtual space displayed on a VR terminal 40, and includes a control unit 50, wherein the control unit 50 includes a task procedure storage unit 55 configured to store a reference value of a task procedure for the inspection training on refrigeration cycle equipment, and
wherein the control unit 50 is configured to compare the reference value of the task procedure stored in the task procedure storage unit 55 with an actual task procedure of the inspection training performed by a user in the virtual space, and output a report indicating a result of the comparing.

Accordingly, the server 20 according to one embodiment can output, as information that enables easy determination of whether the actual task procedure of the inspection training on the refrigeration cycle equipment performed by the user in the virtual space is appropriate, a report indicating a comparison result between the reference value of the task procedure and the actual task procedure.

Further, an information processing method according to one embodiment is an information processing method executed by an information processing system 10 configured to cause inspection training on refrigeration cycle equipment to be executed in a virtual space displayed on a VR terminal 40, the information processing method including: comparing a reference value of a task procedure for the inspection training on refrigeration cycle equipment stored in the task procedure storage unit 55 with an actual task procedure of the inspection training performed by a user in the virtual space; and outputting a report indicating a result of the comparing.

Accordingly, the information processing method according to one embodiment can cause the information processing system 10 to output, as information that enables easy determination of whether the actual task procedure of the inspection training on the refrigeration cycle equipment performed by the user in the virtual space is appropriate, a report indicating a comparison result between the reference value of the task procedure and the actual task procedure.

Further, a program according to one embodiment causes an information processing system 10 configured to cause inspection training on refrigeration cycle equipment to be executed in a virtual space displayed on a VR terminal 40 to: compare a reference value of a task procedure for the inspection training on refrigeration cycle equipment stored in the task procedure storage unit 55 with an actual task procedure of the inspection training performed by a user in the virtual space; and output a report indicating a result of the comparing.

Accordingly, the program according to one embodiment can cause the information processing system 10 to output, as information that enables easy determination of whether the actual task procedure of the inspection training on the refrigeration cycle equipment performed by the user in the virtual space is appropriate, a report indicating a comparison result between the reference value of the task procedure and the actual task procedure.

Although embodiments have been described above, it will be understood that various changes can be made to the configurations and details without departing from the spirit and scope of the claims. Various modifications and improvements such as combinations or substitutions with some or all of other embodiments are possible.

This international application is based on and claims priority to Japanese Patent Application No. 2025-044387, filed on March 19, 2025, the entire contents of which are incorporated herein by reference.

### DESCRIPTION OF THE REFERENCE NUMERALS

- 10: Information processing system
- 12: Communication network
- 20: Server (Information processing apparatus)
- 30: PC (Administrator terminal)
- 32: Display
- 40: VR terminal (User terminal)
- 41: VR goggles
- 42: Controller
- 50: Control unit
- 51: Authentication information storage unit
- 52: User authentication unit
- 53: VR control unit
- 54: Task log storage unit (Second storage unit)
- 55: Task procedure storage unit (First storage unit)
- 56: Evaluation unit
- 57: Evaluation result output unit
- 300: Virtual space image
- 301: Virtual space
- 301A: Ceiling portion
- 302: Indoor unit (Refrigeration cycle equipment)
- 303: Thermometer (Inspection tool)
- 304, 305: Window
- 400-1, 400-2: Report
- 401: First evaluation result display field
- 402: Second evaluation result display field
- 403: Third evaluation result display field
- 404: Fourth evaluation result display field
- 405: Fifth evaluation result display field
- 406: Work history display field

## Claims

1. An information processing system configured to cause inspection training on refrigeration cycle equipment to be executed in a virtual space displayed on a user terminal, the information processing system comprising:
a control unit; and
a first storage unit configured to store a reference value of a task procedure for inspection training on refrigeration cycle equipment,
wherein the control unit is configured to:
compare the reference value of the task procedure stored in the first storage unit with an actual task procedure of the inspection training performed by a user in the virtual space; and
output a report indicating a result of the comparing.

2. The information processing system according to claim 1,
wherein the inspection training executed in the virtual space includes a certification mode and a training mode, and
the control unit is configured to:
authenticate a user who performs the inspection training in the virtual space;
cause the virtual space to be displayed on the user terminal used by the authenticated user; and
execute output processing for outputting the report when the user is authenticated in the certification mode.

3. The information processing system according to claim 2,
wherein the control unit is configured to, when the user is authenticated in the training mode, cause an instructor image for providing a lecture on the inspection training to be displayed in the virtual space.

4. The information processing system according to claim 2 or 3,
wherein, in the same virtual space, a number of users authenticated in the certification mode is one, and a number of users authenticated in the training mode is one or more.

5. The information processing system according to any one of claims 1 to 4,
wherein the control unit is configured to cause, in the virtual space, an inspection tool that is operable by the user for the inspection training to be displayed together with the refrigeration cycle equipment.

6. The information processing system according to any one of claims 1 to 5,
wherein the task procedure of the inspection training includes required check items and standard task items, and
the report includes information indicating whether the user has performed verification tasks corresponding to the required check items.

7. The information processing system according to any one of claims 1 to 6,
wherein the control unit is configured to:
compare the actual task procedure of the inspection training performed by the user with an actual task procedure of the inspection training performed by another user, and
output the report indicating a result of the comparing the actual task procedure of the inspection training performed by the user with the actual task procedure of the inspection training performed by the another user.

8. The information processing system according to any one of claims 1 to 7, further comprising:
a second storage unit configured to store the actual task procedure of the inspection training performed by the user in the virtual space.

9. The information processing system according to any one of claims 1 to 8,
wherein the first storage unit is configured to store different reference values of the task procedure for respective virtual spaces.

10. An information processing apparatus configured to cause inspection training on refrigeration cycle equipment to be executed in a virtual space displayed on a user terminal, the information processing apparatus comprising:
a control unit; and
a first storage unit configured to store a reference value of a task procedure for inspection training on refrigeration cycle equipment,
wherein the control unit is configured to:
compare the reference value of the task procedure stored in the first storage unit with an actual task procedure of the inspection training performed by a user in the virtual space; and
output a report indicating a result of the comparing.

11. An information processing method executed by an information processing system configured to cause inspection training on refrigeration cycle equipment to be executed in a virtual space displayed on a user terminal, the information processing method comprising:
comparing a reference value of a task procedure for the inspection training on refrigeration cycle equipment stored in a first storage unit with an actual task procedure of the inspection training performed by a user in the virtual space; and
outputting a report indicating a result of the comparing.

12. A program for causing an information processing system configured to cause inspection training on refrigeration cycle equipment to be executed in a virtual space displayed on a user terminal to:
compare a reference value of a task procedure for the inspection training on refrigeration cycle equipment stored in a first storage unit with an actual task procedure of the inspection training performed by a user in the virtual space; and
output a report indicating a result of the comparing.
